# EUROPEAN PATENT SPECIFICATION

(11) **EP 4 205 564 B1**
(45) Date of publication and mention of the grant of the patent: **04.11.2026**
(21) Application number: 21872295.7
(22) Date of filing: 15.09.2021
(51) Int. Cl.: A23N 15/06, F25D 23/00, A23B 7/144, F25D 17/04, A23B 7/152

(54) **RIPENING CONTROL DEVICE, AIR COMPOSITION ADJUSTMENT DEVICE, CONTAINER, AND FREEZER**
REIFUNGSSTEUERUNGSVORRICHTUNG, LUFTZUSAMMENSETZUNGSANPASSUNGSVORRICHTUNG, BEHÄLTER UND GEFRIERSCHRANK
DISPOSITIF DE COMMANDE DE MÛRISSEMENT, DISPOSITIF DE RÉGLAGE DE COMPOSITION D'AIR, CONTENEUR ET CONGÉLATEUR ASSOCIÉS

(30) Priority: 25.09.2020 JP 2020160782
(43) Date of publication of application: 05.07.2023
(73) Proprietor: Daikin Industries, Ltd., Osaka-shi, Osaka 530-0001 (JP)
(72) Inventor: SATOU, Kiichirou, Osaka-shi, Osaka 530-0001 (JP); NISHIMOTO, Motomi, Osaka-shi, Osaka 530-0001 (JP); NAKANO, Masataka, Osaka-shi, Osaka 530-0001 (JP); TANNO, Shouichi, Osaka-shi, Osaka 530-0001 (JP); MATSUI, Hidenori, Osaka-shi, Osaka 530-0001 (JP)
(74) Representative: Hoffmann Eitle
(86) International application number: PCT/JP2021/033979
(87) International publication number: WO 2022/065165

(56) References cited:
- EP-A1- 2 902 732
- CN-A- 105 432 775
- CN-A- 109 315 484
- JP-A- 2002 262 767
- JP-A- 2005 080 558
- JP-A- 2016 191 532
- JP-A- H05 277 326
- JP-A- H07 241 134
- JP-A- H08 508 890
- JP-A- H10 234 293
- JP-A- S5 338 540
- US-A- 5 452 581

## Description

### TECHNICAL FIELD

The present disclosure relates to a ripening control device, an air composition adjustment device, a container, and a freezer.

### BACKGROUND ART

JP 2002 262767 A discloses a method for controlling ethylene gas concentration, in which method ethylene gas released from fruits in storage is adsorbed by a filter to maintain a low-concentration ethylene gas atmosphere, while an ethylene gas cylinder is opened to introduce ethylene gas into the storage to facilitate ripening of fruits that have reached their shipping delivery date.

EP 2902732 A1 describes a domestic/professional refrigerator comprising a storage chamber for produce storage and a produce ripening control system, wherein the produce ripening control system comprises an ethylene absorber adapted to operate in absorption mode in a first status and in desorption mode in a second status; a recirculation circuit configured to fluidly connect the absorber with the storage chamber and to draw air from the storage chamber, to flow the drawn air through the absorber and to return it into the storage chamber; and a control unit configured to selectively operate the absorber either in the absorption mode for ethylene absorption or in the desorption mode for ethylene desorption.

### SUMMARY OF THE INVENTION

### TECHNICAL PROBLEM

However, in the known technique, a separate ethylene gas cylinder need to be prepared to introduce ethylene gas, which makes the equipment larger and requires more space for installation.

It is an object of the present disclosure to supply a ripening component to a target space with a relatively simple configuration.

### SOLUTION TO THE PROBLEM

The present invention is defined by the appended set of claims. A first aspect of the present disclosure is defined in claim 1.

According to the first aspect, the ripening component (16) generated from the object (15) is held in the holding unit (62). The ripening component (16) is desorbed from the holding unit (62) by the desorption unit (63). The ripening component (16) desorbed by the desorption unit (63) is supplied to the target space (S) by the supply unit (65).

This configuration allows the ripening component (16) generated from the object (15) to be held in the holding unit (62), making it possible to decelerate ripening of the object (15) in a period when the freshness of the object (15) needs to be maintained.

On the other hand, when it is time to ripen the object (15), the ripening component (16) is desorbed from the holding unit (62) and supplied into the target space (S), so that the ripening component (16) can be reused.

The ripening control device further includes: a discharge portion (74) configured to discharge at least part of the ripening component (16) desorbed by the desorption unit (63) to outside of the target space (S).

At least part of the ripening component (16) desorbed by the desorption unit (63) is discharged to the outside of the target space (S) through a discharge portion (74).

Thus, the ripening component (16) that cannot be held in the holding unit (62) can be discharged to the outside of the target space (S).

Also, according to the first aspect, at least part of the ripening component (16) desorbed by the desorption unit (63) is stored in the storage unit (66).

Thus, the ripening component (16) that cannot be held in the holding unit (62) can be stored in the storage unit (66).

A second aspect of the present disclosure is an embodiment of the first aspect. In the second aspect, the ripening control device further includes: a ripening control unit (70) configured to control operations of the desorption unit (63) and the supply unit (65), wherein the target space (S) includes a first target space (101) and a second target space (102), and the ripening control unit (70) executes a first mode in which the ripening component (16) generated from the object (15) in the second target space (102) and held in the holding unit (62) is supplied to the first target space (101).

According to the second aspect, the ripening component (16) generated from the object (15) in the second target space (102) is collected and supplied to the object (15) in the first target space (101).

A third aspect of the present disclosure is an embodiment of the second aspect. In the third aspect, the ripening control unit (70) executes a second mode in which the ripening component (16) generated from the object (15) in the first target space (101) and held in the holding unit (62) is supplied to the second target space (102).

According to the third aspect, the ripening component (16) generated from the object (15) in the first target space (101) is collected and supplied to the object (15) in the second target space (102).

A fourth aspect of the present disclosure is an embodiment of any one of the first to third aspects. In the fourth aspect, the holding unit (62) has a hollow fiber membrane (62a).

According to the fourth aspect, the hollow fiber membrane (62a) used as the holding unit (62) can hold the ripening component (16) efficiently.

A fifth aspect of the present disclosure is an embodiment of any one of the first to third aspects. In the fifth aspect, the holding unit (62) has a metal organic framework.

According to the fifth aspect, the metal organic framework used as the holding unit (62) can hold the ripening component (16) efficiently.

A sixth aspect of the present disclosure is an embodiment of any one of the first to fifth aspects. In the sixth aspect, the holding unit (62) is connected to a storage tank (66) for storing air containing the ripening component (16).

According to the sixth aspect, air containing the ripening component (16) held in the holding unit (62) can be stored in the storage tank (66).

A seventh aspect of the present disclosure is an embodiment of any one of the first to sixth aspects. In the seventh aspect, the desorption unit (63) has a heating unit (64) configured to heat the holding unit (62).

According to the seventh aspect, the desorption unit (63) includes a heating unit (64). It is therefore possible to heat the holding unit (62) and desorb the ripening component (16) held in the holding unit (62).

An eighth aspect of the present disclosure is an embodiment of any one of the first to seventh aspects. In the eighth aspect, the desorption unit (63) has a compression unit (65) configured to compress the holding unit (62).

According to the eighth aspect, the desorption unit (63) includes a compression unit (65). It is therefore possible to compress the holding unit (62) and desorb the ripening component (16) held in the holding unit (62).

A ninth aspect of the present disclosure is an embodiment of any one of the first to eighth aspects. In the ninth aspect, the ripening control device further includes: a measurement unit (86) configured to measure a concentration of the ripening component (16) in the target space (S).

According to the ninth aspect, the measurement unit (86) measures the concentration of the ripening component (16) in the target space (S), thereby making it possible to manage the state of ripeness of the object (15).

A tenth aspect of the present disclosure is an embodiment of any one of the first to ninth aspects. In the tenth aspect, the ripening control device further includes: an adjuster (80) configured to adjust a concentration of the ripening component (16) in the target space (S).

According to the tenth aspect, the adjuster (80) adjusts the concentration of the ripening component (16) in the target space (S), thereby making it possible to manage the state of ripeness of the object (15).

A eleventh aspect of the present disclosure is an embodiment of any one of the first to tenth aspects. In the eleventh aspect, the adjuster (80) includes at least one of a heating unit (64), a compression unit (65), an adjustment valve (85), an open/close portion (92), or a switching valve (95), the heating unit (64) adjusts an amount of heating the holding unit (62), the compression unit (65) adjusts an amount of compressing the holding unit (62), the adjustment valve (85) adjusts an amount of air to be released from the holding unit (62) to the target space (S), the open/close portion (92) adjusts an opening degree of a discharge outlet (91) connecting a storage tank (66) for storing the ripening component (16) with outside, and the switching valve (95) is configured to allow any one of a plurality of discharge passages (96, 97, 98) having different passage diameters and connected to the outside to communicate with the storage tank (66).

According to the eleventh aspect, at least one of the heating unit (64), the compression unit (65), the adjustment valve (85), the open/close portion (92), or the switching valve (95) is used to adjust the concentration of the ripening component (16) in the target space (S), thereby making it possible to manage the state of ripeness of the object (15).

A twelfth aspect of the present disclosure is an embodiment of any one of the first to eleventh aspects. In the twelfth aspect, the ripening control device further includes: a detector (87) configured to detect a state of the object (15); and a ripening control unit (70) configured to control an operation of the desorption unit (63) based on a detection result of the detector (87).

According to the twelfth aspect, the detector (87) detects the state of the object (15). The ripening control unit (70) controls the operation of the desorption unit (63) based on the detection result.

It is therefore possible to increase or lower the concentration of the ripening component (16) to be supplied into the target space (S) according to the state of ripeness of the object (15).

A thirteenth aspect of the present disclosure is directed to an air composition adjustment device, including: the ripening control device (60) of any one of the first to twelfth aspects; and an air composition adjuster (30) configured to introduce air adjusted to composition different from composition of outside air into the target space (S).

According to the thirteenth aspect, the air composition adjustment device including the ripening control device (60) and the air composition adjuster (30) adjusts the concentration of the ripening component (16) in the target space (S) and the air composition in the target space (S), thereby making it possible to manage the state of ripeness of the object (15).

A fourteenth aspect of the present disclosure is directed to a container, including: the ripening control device (60) of any one of the first to twelfth aspects; and a container body (2) having the target space (S) therein.

According to the fourteenth aspect, the container includes the ripening control device (60) and the container body (2), and the state of ripeness of the object (15) housed in the container body (2) can be managed.

A fifteenth aspect of the present disclosure is directed to a freezer, including: the ripening control device (60) of any one of the first to twelfth aspects; and a refrigeration apparatus (10) configured to cool the target space (S).

According to the fifteenth aspect, the freezer includes the ripening control device (60) and the refrigeration apparatus (10), and the state of ripeness of the object (15) housed in the freezer can be managed.

### BRIEF DESCRIPTION OF THE DRAWINGS

FIG. 1 is a sectional side view of a general configuration of a container having a ripening control device according to an embodiment.
FIG. 2 is a piping system diagram illustrating a refrigerant circuit of a refrigeration apparatus.
FIG. 3 is a piping system diagram of an air circuit of an air composition adjustment device, illustrating a flow of air in a first connection state.
FIG. 4 is a piping system diagram of the air circuit of the air composition adjustment device, illustrating a flow of air in a second connection state.
FIG. 5 is a flowchart showing operations of the ripening control device.
FIG. 6 is a diagram illustrating a general configuration of a ripening control device according to a first variation.
FIG. 7 is a diagram illustrating a general configuration of a ripening control device according to a second variation.
FIG. 8 is a diagram illustrating a general configuration of a ripening control device according to a third variation.
FIG. 9 is a diagram for explaining a first mode of a ripening control device according to a fourth variation.
FIG. 10 is a diagram for explaining a second mode of the ripening control device.

### DESCRIPTION OF EMBODIMENTS

Embodiments of the present invention will now be described in detail with reference to the drawings.

### <Container>

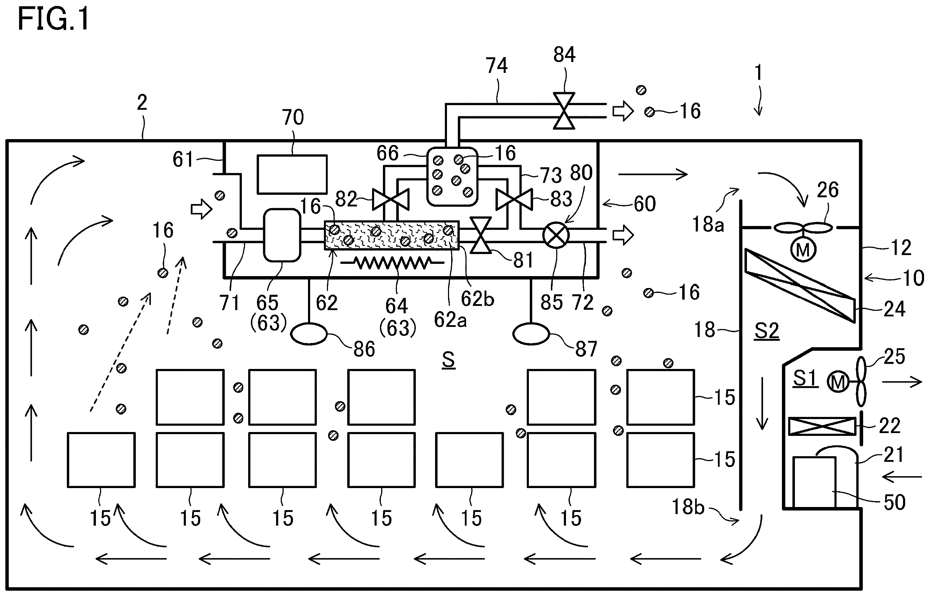

As illustrated in FIG. 1, a container (1) includes a container body (2), a refrigeration apparatus (10), an air composition adjustment device (50) (controlled atmosphere (CA) system), and a ripening control device (60). The container (1) is used for marine transportation.

The refrigeration apparatus (10) cools air in an internal space (S) of the container body (2) (target space). The air composition adjustment device (50) introduces air adjusted to a composition different from that of the outside air into the internal space (S). The ripening control device (60) controls the state of ripeness of plants (15) (objects) stored in the internal space (S).

In the internal space of the container body (2), boxed plants (15) as fresh items are stored. Examples of the plants (15) include garden stuff, such as bananas and avocados, vegetables, cereals, bulbous plants, and natural flowers. The plants (15) breathe by absorbing oxygen (O₂) in the air and releasing carbon dioxide (CO₂). The plants (15) produce a gas containing a ripening component (16). The ripening component (16) is, for example, ethylene. The ripening of the plants (15) is accelerated by the ripening component (16).

### <Refrigeration Apparatus>

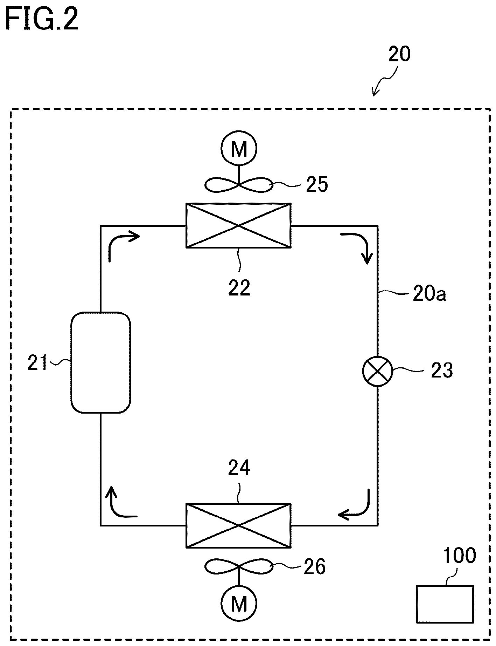

The refrigeration apparatus (10) includes a refrigeration casing (12), a refrigerant circuit (20) configured to perform a refrigeration cycle, and a refrigeration control unit (100) (see FIG. 2).

The container body (2) has a shape of an elongated rectangular parallelepiped box with its one end open. The refrigeration casing (12) is attached to the periphery of the opening of the container body (2) to close the open end of the container body (2).

A lower portion of the refrigeration casing (12) is formed so as to protrude into the container body (2). Thus, a first storage space (S1) is formed at the lower portion of the refrigeration casing (12) on the external side of the container body (2).

The first storage space (S1) houses a compressor (21), a condenser (22), the air composition adjustment device (50), and an external fan (25). The condenser (22) is disposed in the middle of the first storage space (S1) in the vertical direction. The compressor (21) and the air composition adjustment device (50) are arranged below the condenser (22). The external fan (25) is arranged above the condenser (22).

A second storage space (S2) is formed at an upper portion of the refrigeration casing (12) on the internal side of the container body (2). The second storage space (S2) houses an evaporator (24) and an internal fan (26). The internal fan (26) is disposed above the evaporator (24).

A partition plate (18) is disposed in the container body (2). The partition plate (18) is disposed to face an inner surface of the refrigeration casing (12). The partition plate (18) separates the second storage space (S2) from the internal space (S) of the container body (2) where the plants (15) are stored.

A suction port (18a) is formed between the upper end of the partition plate (18) and a ceiling surface in the container body (2). Inside air of the container body (2) is taken into the second storage space (S2) through the suction port (18a).

A blow-out port (18b) is formed between the lower end of the partition plate (18) and a bottom surface in the container body (2). Through the blow-out port (18b), the air which has been cooled by the refrigeration apparatus (10) is blown into the container body (2).

### <Operation of Refrigeration Apparatus>

As illustrated in FIG. 2, the refrigerant circuit (20) is a closed circuit in which the compressor (21), the condenser (22), an expansion valve (23), and the evaporator (24) are connected together in this order by a refrigerant pipe (20a). A refrigerant circulates in the refrigerant circuit (20) to perform a vapor compression refrigeration cycle.

The refrigeration control unit (100) controls operations of the compressor (21), the expansion valve (23), the external fan (25), and the internal fan (26). The refrigeration control unit (100) performs a cooling operation to cool the inside air of the container body (2).

The external fan (25) sends air (outside air) of the external space of the container body (2) to the condenser (22). In the condenser (22), heat is exchanged between the refrigerant compressed in the compressor (21) and flowing through the condenser (22) and the outside air sent to the condenser (22) by the external fan (25).

The internal fan (26) sucks the inside air of the container body (2) from the suction port (18a), and blows the air to the evaporator (24). In the evaporator (24), heat is exchanged between the refrigerant decompressed by the expansion valve (23) and flowing through the evaporator (24) and the inside air sent to the evaporator (24) by the internal fan (26), thereby cooling the inside air.

The inside air cooled by the evaporator (24) is blown again into the container body (2) via the blow-out port (18b). Thus, air in the internal space (S) of the container body (2) is cooled.

### <Air Composition Adjustment Device>

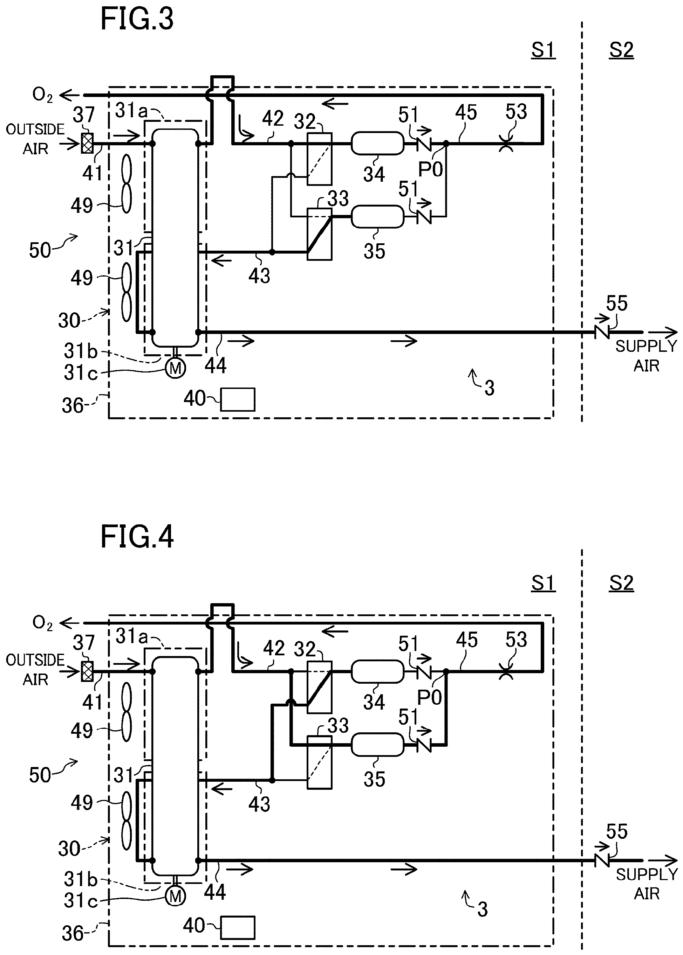

As illustrated in FIG. 3, the air composition adjustment device (50) includes a gas supply unit (30) (air composition adjuster) and an air composition control unit (40). The air composition adjustment device (50) adjusts an oxygen concentration and a carbon dioxide concentration in the inside air of the container body (2). The term "concentration" to be used in the following description always indicates a "volumetric concentration."

The gas supply unit (30) is a unit for generating component-adjusted air. In this embodiment, the gas supply unit (30) generates nitrogen-enriched air having a low oxygen concentration, which is to be supplied into the internal space (S) of the container body (2). The gas supply unit (30) employs vacuum pressure swing adsorption (VPSA).

The gas supply unit (30) has an air pump (31), a first directional control valve (32), a second directional control valve (33), and an air circuit (3). A first adsorption column (34) and a second adsorption column (35) are connected to the air circuit (3). An adsorbent for adsorbing a nitrogen component in the air is provided in each of the first adsorption column (34) and the second adsorption column (35). The components of the air circuit (3) are housed in a unit case (36).

The air pump (31) has a first pump mechanism (31a) and a second pump mechanism (31b). The first pump mechanism (31a) constitutes a compression pump mechanism configured to compress, and discharge, sucked air. The second pump mechanism (31b) constitutes a decompression pump mechanism. The first pump mechanism (31a) and the second pump mechanism (31b) are connected to the drive shaft of a motor (31c).

Components, such as the air pump (31), are connected to the air circuit (3). The air circuit (3) includes an outside air passage (41), a compression passage (42), a decompression passage (43), a supply passage (44), and an oxygen discharge passage (45).

The outside air passage (41) passes through the unit case (36) from the inside to the outside. One end of the outside air passage (41) is connected to a suction port of the first pump mechanism (31a). A membrane filter (37) is provided at the other end of the outside air passage (41).

One end of the compression passage (42) is connected to a discharge port of the first pump mechanism (31a). The other end of the compression passage (42) is divided into two branches, which are connected to the first and second directional control valves (32) and (33), respectively.

One end of the decompression passage (43) is connected to a suction port of the second pump mechanism (31b). The other end of the decompression passage (43) is divided into two branches, which are connected to the first and second directional control valves (32) and (33), respectively. One end of the supply passage (44) is connected to a discharge port of the second pump mechanism (31b). The other end of the supply passage (44) is open in the second storage space (S2) of the container body (2). A check valve (55) is provided at the other end portion of the supply passage (44). The check valve (55) allows the air to flow toward the second storage space (S2) and prevents backflow of the air.

Two fans (49) are provided near the lateral side of the air pump (31). The fans (49) blow air toward the air pump (31) to cool the air pump (31).

The first pump mechanism (31a), which serves as the compression pump mechanism, supplies compressed air to one of the first adsorption column (34) or the second adsorption column (35), thereby performing an adsorption operation of causing the nitrogen component in the compressed air to be adsorbed on the adsorbent in the adsorption column.

The second pump mechanism (31b), which serves as the decompression pump mechanism, sucks air from inside of the other one of the first adsorption column (34) or the second adsorption column (35), thereby performing a desorption operation of desorbing the nitrogen component adsorbed on the adsorbent in the adsorption column. The desorption operation generates nitrogen-enriched air.

The adsorption operation and the desorption operation are alternately performed in the first adsorption column (34) and the second adsorption column (35). The supply passage (44) is a passage for supplying the nitrogen-enriched air generated by the desorption operation into the container body (2).

One end of the oxygen discharge passage (45) is connected to other end portions (outflow ports during compression) of the first adsorption column (34) and the second adsorption column (35). The oxygen discharge passage (45) leads the oxygen-enriched air generated by compressing outside air to the outside of the container body (2).

The one end of the oxygen discharge passage (45) is divided into two branches, which are connected to the other end portions of the first and the second adsorption columns (34) and (35), respectively. The other end of the oxygen discharge passage (45) opens outside the gas supply unit (30), i.e., outside the container body (2). A check valve (51) is provided at each of branch portions where the oxygen discharge passage (45) is connected to the first adsorption column (34) and the second adsorption column (35). The check valve (51) prevents backflow of air from the oxygen discharge passage (45) to the first adsorption column (34) and the second adsorption column (35).

An orifice (53) is provided at a midpoint of the oxygen discharge passage (45). The orifice (53) decompresses the oxygen-enriched air having flowed out of the first adsorption column (34) and the second adsorption column (35) before the oxygen-enriched air is discharged to the outside of the container. The oxygen discharge passage (45) is a passage for discharging the oxygen-enriched air generated in the first adsorption column (34) and the second adsorption column (35) to the outside of the container.

The first directional control valve (32) and the second directional control valve (33) are disposed between the air pump (31) and the first adsorption column (34) and between the air pump (31) and the second adsorption column (35), respectively. The first directional control valve (32) and the second directional control valve (33) switch the connection states between the air pump (31) and the first adsorption column (34) and between the air pump (31) and the second adsorption column (35), respectively, between two connection states (first or second connection state) to be described later. The air composition control unit (40) controls the switching operations of the first directional control valve (32) and the second directional control valve (33).

The first directional control valve (32) is connected to one end portions of the compression passage (42), the decompression passage (43), and the first adsorption column (34). The compression passage (42) is connected to the discharge port of the first pump mechanism (31a). The decompression passage (43) is connected to the suction port of the second pump mechanism (31b). The one end portion of the first adsorption column (34) is an inflow port during compression.

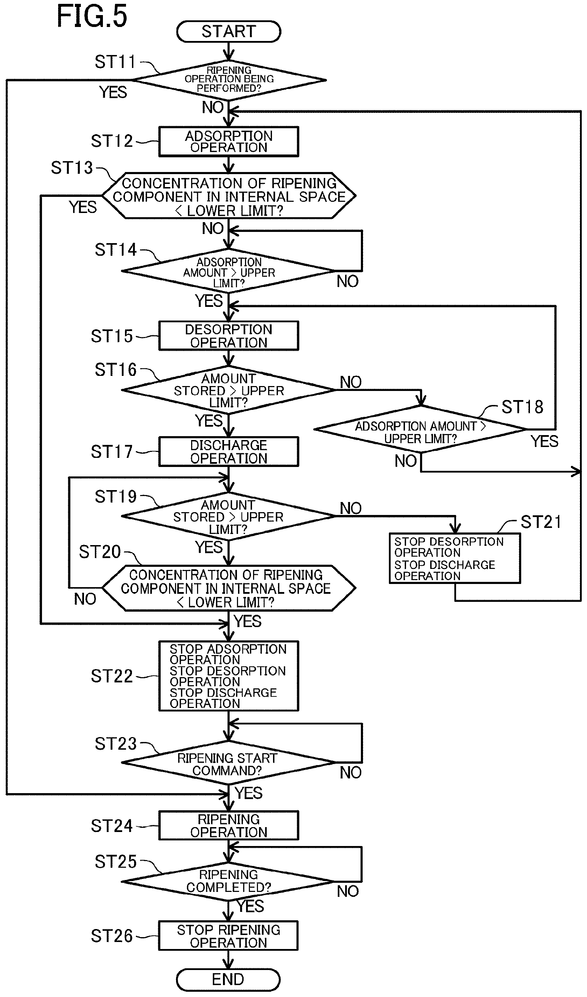

The first directional control valve (32) switches between a first state (the state illustrated in FIG. 4) and a second state (the state illustrated in FIG. 5). **In** the first state, the first adsorption column (34) communicates with the discharge port of the first pump mechanism (31a) and is shut off from the suction port of the second pump mechanism (31b). **In** the second state, the first adsorption column (34) communicates with the suction port of the second pump mechanism (31b) and is shut off from the outlet of the first pump mechanism (31a).

The second directional control valve (33) is connected to one end portions of the compression passage (42), the decompression passage (43), and the second adsorption column (35).

The second directional control valve (33) switches between the first state (the state illustrated in FIG. 3) and the second state (the state illustrated in FIG. 4). **In** the first state, the second adsorption column (35) communicates with the suction port of the second pump mechanism (31b) and is shut off from the discharge port of the first pump mechanism (31a). **In** the second state, the second adsorption column (35) communicates with the discharge port of the first pump mechanism (31a) and is shut off from the suction port of the second pump mechanism (31b).

The air composition control unit (40) controls a concentration adjustment operation in which the oxygen concentration and the carbon dioxide concentration in inside air of the container body (2) are adjusted to desired concentrations. Specifically, the air composition control unit (40) controls the operation of the gas supply unit (30) based on measurement results obtained from an oxygen sensor and a carbon dioxide sensor (both not shown) so that the composition (the oxygen concentration and the carbon dioxide concentration) of the inside air in the container body (2) is controlled to a desired composition (e.g., 5% oxygen and 5% carbon dioxide).

The air composition control unit (40) includes, for example, a microcomputer configured to control components of the air composition adjustment device (50), and a storage medium, such as a memory or a disk storing executable control programs. A detailed structure and algorithm of the air composition control unit (40) may be a combination of any kind of hardware and software.

### <Operation of Air Composition Adjustment Device>

When both of the first directional control valve (32) and the second directional control valve (33) are set to be in the first state, the air circuit (3) is switched to a first connection state (see FIG. 3). In the first connection state, the discharge port of the first pump mechanism (31a) is connected to the first adsorption column (34), and the suction port of the second pump mechanism (31b) is connected to the second adsorption column (35). In the first connection state, the adsorption operation is performed to cause the nitrogen component in outside air to be adsorbed on the adsorbent in the first adsorption column (34), and a desorption operation is performed to desorb the nitrogen component adsorbed on the adsorbent in the second adsorption column (35).

When both of the first directional control valve (32) and the second directional control valve (33) are set to be in the second state, the air circuit (3) is switched to a second connection state (see FIG. 4). In the second connection state, the outlet of the first pump mechanism (31a) is connected to the second adsorption column (35), and the suction port of the second pump mechanism (31b) is connected to the first adsorption column (34). In the second connection state, the adsorption operation is performed on the second adsorption column (35), and the desorption operation is performed on the first adsorption column (34).

When the air pump (31) supplies the compressed outside air to the first adsorption column (34) and the second adsorption column (35) to compress the inside of these columns (34) and (35), the nitrogen component in the outside air is adsorbed on the adsorbent. This produces oxygen-enriched air with a smaller amount of the nitrogen component than the outside air. The oxygen-enriched air has a lower nitrogen concentration and a higher oxygen concentration than the outside air. The oxygen-enriched air is discharged to the outside of the container through the oxygen discharge passage (45).

On the other hand, when the air pump (31) sucks the air from the first adsorption column (34) and the second adsorption column (35) to decompress the inside of these columns (34) and (35), the nitrogen component adsorbed on the adsorbent is desorbed. This produces nitrogen-enriched air with a greater amount of the nitrogen component than the outside air. The nitrogen-enriched air has a higher nitrogen concentration and a lower oxygen concentration than the outside air. In this embodiment, the nitrogen-enriched air of 92% nitrogen and 8% oxygen, for example, is produced. The nitrogen-enriched air is sucked into the second pump mechanism (31b), compressed, and discharged toward the supply passage (44).

Since the plants (15) breathe in the internal space (S) of the container body (2), the oxygen concentration of the inside air of the container body (2) decreases and eventually reaches a target oxygen concentration of 5%.

### <Ripening Control Device>

As illustrated in FIG. 1, the ripening control device (60) controls the state of ripeness of the plants (15) stored in the internal space (S). The ripening control device (60) has an adsorption unit (62) (holding unit), a desorption unit (63), a compression/decompression device (65) (supply unit), a storage tank (66) (storage unit), and a ripening control unit (70).

A unit case (61) is provided on a ceiling surface in the container body (2). The unit case (61) houses the components of the ripening control device (60).

A downstream end of an intake passage (71) is connected to the adsorption unit (62). An upstream end of the intake passage (71) is open to the internal space (S) through the unit case (61). An upstream end of a release passage (72) is connected to the adsorption unit (62). A downstream end of the release passage (72) is open to the internal space (S) through the unit case (61).

The adsorption unit (62) has a hollow fiber membrane (62a) (hollow fiber) and an adsorption column (62b). The hollow fiber membrane (62a) is disposed in the adsorption column (62b). The hollow fiber membrane (62a) adsorbs the ripening component (16) that is generated from the plants (15) and ripens the plants (15). The ripening component (16) is, for example, ethylene. A metal organic framework (MOF) may be used instead of the hollow fiber membrane (62a).

The desorption unit (63) has a heater (64) (heating unit). The heater (64) is disposed along the outer surface of the adsorption column (62b). The heater (64) heats the hollow fiber membrane (62a), thereby desorbing the ripening component (16) adsorbed on the hollow fiber membrane (62a). The amount of the ripening component (16) desorbed is increased by increasing the amount of heating by the heater (64).

The compression/decompression device (65) is connected to the intake passage (71). The compression/decompression device (65) is a blower that sends inside air of the container to the adsorption unit (62). The compression/decompression device (65) circulates the inside air between the ripening control device (60) and the internal space (S) of the container body (2) via the intake passage (71) and the release passage (72).

The compression/decompression device (65) can also compress the hollow fiber membrane (62a) by increasing the amount of air to be sent to the adsorption unit (62). When the hollow fiber membrane (62a) is compressed, the ripening component (16) adsorbed on the hollow fiber membrane (62a) is desorbed from the compressed hollow fiber membrane (62a). That is, the compression/decompression device (65) also functions as the desorption unit (63) that desorbs the ripening component (16) adsorbed on the adsorption unit (62). The amount of the ripening component (16) desorbed is increased by increasing the amount of compression by the compression/decompression device (65).

A first on-off valve (81) and an adjustment valve (85) are connected to the release passage (72) in this order from the upstream side. The opening degree of the adjustment valve (85) is adjusted to adjust the amount of air to be released from the release passage (72).

An upstream end of a bypass passage (73) is connected to the adsorption unit (62). The upstream end of the bypass passage (73) is connected to an axial middle portion of the adsorption column (62b). A downstream end of the bypass passage (73) is connected to a portion of the release passage (72) between the first on-off valve (81) and the adjustment valve (85).

A second on-off valve (82), the storage tank (66), and a third on-off valve (83) are connected to the bypass passage (73) in this order from the upstream side. The storage tank (66) stores the ripening component (16) desorbed from the adsorption unit (62).

An upstream end of a discharge passage (74) is connected to the storage tank (66). A downstream end of the discharge passage (74) is open to the outside of the container body (2). A fourth on-off valve (84) is connected to the discharge passage (74).

The ripening control unit (70) controls a concentration adjustment operation in which the concentration of the ripening component (16) in the internal space (S) is adjusted to a desired concentration.

The ripening control unit (70) includes, for example, a microcomputer configured to control components of the ripening control device (60), and a storage medium, such as a memory and a disk storing executable control programs. A detailed structure and algorithm of the ripening control unit (70) may be a combination of any kind of hardware and software.

A measurement unit (86) and a detector (87) are connected to the ripening control unit (70). The measurement unit (86) and the detector (87) are disposed in the internal space (S) of the container body (2).

The measurement unit (86) measures the concentration of the ripening component (16) in the internal space (S). The measurement unit (86) is configured, for example, as a semiconductor sensor that detects ethylene. The information indicating the concentration of the ripening component (16) measured by the measurement unit (86) is sent to the ripening control unit (70).

The detector (87) detects the state of the plants (15). The detector (87) is configured, for example, as a camera that captures an image of the plants (15). The information indicating the state of the plants (15) detected by the detector (87) is sent to the ripening control unit (70).

The ripening control unit (70) controls the operations of the compression/decompression device (65), the desorption unit (63), the adjustment valve (85), the first on-off valve (81), the second on-off valve (82), the third on-off valve (83), and the fourth on-off valve (84), based on the measurement result of the measurement unit (86) and the detection result of the detector (87).

For example, the ripening control unit (70) performs an adsorption operation to lower the concentration of the ripening component (16) in the internal space (S) during transportation of the container (1) to the destination, during which the freshness of the plants (15) stored needs to be maintained.

Specifically, the compression/decompression device (65) is activated to send inside air of the container to the adsorption unit (62), thereby causing the ripening component (16) contained in the inside air to be adsorbed on the hollow fiber membrane (62a). The air from which the ripening component (16) has been removed is released back into the internal space (S). The inside air is circulated between the internal space (S) and the adsorption unit (62) in this manner, making it possible to lower the concentration of the ripening component (16) in the internal space (S).

The ripening control unit (70) performs a ripening operation to increase the concentration of the ripening component (16) in the internal space (S) when it is time to ripen the plants (15) shortly before the arrival of the container (1) at the destination.

Specifically, the heater (64) heats the adsorption unit (62), thereby desorbing the ripening component (16) adsorbed on the hollow fiber membrane (62a). Alternatively, the amount of air sent from the compression/decompression device (65) may be increased to compress the hollow fiber membrane (62a), thereby desorbing the ripening component (16) adsorbed on the hollow fiber membrane (62a). The ripening component (16) desorbed is stored in the storage tank (66). The ripening component (16) stored in the storage tank (66) is released into the internal space (S) through the release passage (72). This allows the ripening component (16) generated from the plants (15) to be reused and can increase the concentration of the ripening component (16) in the internal space (S).

### <Operation of Ripening Control Device>

As illustrated in FIG. 5, in step ST11, the ripening control unit (70) determines whether a ripening operation for supplying the ripening component (16) to the internal space (S) is being performed. If the determination in step ST11 is "YES," the process goes to step ST24. If the determination in step ST11 is "NO," the process goes to step ST12.

In step ST12, the ripening control unit (70) controls the compression/decompression device (65) to perform an adsorption operation to cause the ripening component (16) to be adsorbed on the adsorption unit (62). In the adsorption operation, the ripening control unit (70) makes the first on-off valve (81) in an open state, and the second on-off valve (82), the third on-off valve (83), and the fourth on-off valve (84) in a closed state. The ripening control unit (70) activates the compression/decompression device (65) and adjusts the opening degree of the adjustment valve (85).

The inside air sucked through the intake passage (71) contains the ripening component (16). The ripening component (16) is adsorbed on the hollow fiber membrane (62a) of the adsorption unit (62). The air after the adsorption of the ripening component (16) is released into the internal space (S) through the release passage (72).

In step ST13, the ripening control unit (70) determines whether the concentration of the ripening component (16) in the internal space (S) is less than a predetermined lower limit. If the determination in step ST13 is "YES," the process goes to step ST22. If the determination in step ST13 is "NO," the process goes to step ST14.

In step ST14, the ripening control unit (70) determines whether the ripening component (16) adsorbed on the adsorption unit (62) is greater than a predetermined upper limit. The upper limit is set according to the amount of the ripening component (16) that can be adsorbed on the adsorption unit (62). If the determination in step ST14 is "YES," the process goes to step ST15. If the determination in step ST14 is "NO," step ST14 is repeated.

In step ST15, the ripening control unit (70) controls the desorption unit (63) to perform a desorption operation to desorb part of the ripening component (16) adsorbed on the adsorption unit (62). In the desorption operation, the ripening control unit (70) makes the second on-off valve (82) in an open state, and the first on-off valve (81), the third on-off valve (83), and the fourth on-off valve (84) in a closed state. The ripening control unit (70) energizes the heater (64) to heat the heater (64).

The ripening component (16) adsorbed on the adsorption unit (62) is heated by the heater (64) and thereby desorbed from the adsorption unit (62). The ripening component (16) desorbed is stored in the storage tank (66) through the bypass passage (73).

In step ST16, the ripening control unit (70) determines whether the amount of the ripening component (16) stored in the storage tank (66) is larger than a predetermined upper limit. The upper limit is set according to the amount of the ripening component (16) that can be stored in the storage tank (66). If the determination in step ST16 is "YES," the process goes to step ST17. If the determination in step ST16 is "NO," the process goes to step ST18.

In step ST17, the ripening control unit (70) performs a discharge operation to discharge the ripening component (16) from the storage tank (66) to the outside of the container (1). In the discharge operation, the ripening control unit (70) makes the fourth on-off valve (84) in an open state. Part of the ripening component (16) stored in the storage tank (66) passes through the discharge passage (74) and is discharged to the outside of the container (1). After a certain amount of the ripening component (16) is discharged from the storage tank (66), the ripening control unit (70) makes the fourth on-off valve (84) in a closed state.

In step ST18, the ripening control unit (70) determines whether the ripening component (16) adsorbed on the adsorption unit (62) is greater than a predetermined upper limit. If the determination in step ST18 is "YES," the process goes to step ST15. If the determination in step ST18 is "NO," the process goes to step ST12.

In step ST19, the ripening control unit (70) determines whether the amount of the ripening component (16) stored in the storage tank (66) is larger than a predetermined upper limit. If the determination in step ST19 is "YES," the process goes to step ST20. If the determination in step ST19 is "NO," the process goes to step ST21.

In step ST20, the ripening control unit (70) determines whether the concentration of the ripening component (16) in the internal space (S) is less than a predetermined lower limit. If the determination in step ST20 is "YES," the process goes to step ST22. If the determination in step ST20 is "NO," the process goes to step ST19.

In step ST21, the ripening control unit (70) stops the energization of the heater (64) to stop the desorption operation. The ripening control unit (70) makes the fourth on-off valve (84) in a closed state to stop the discharge operation. The process returns to step ST12 after the end of the step ST21.

In step ST22, the ripening control unit (70) stops the operation of the compression/decompression device (65) to stop the adsorption operation. The ripening control unit (70) stops the energization of the heater (64) to stop the desorption operation. The ripening control unit (70) makes the fourth on-off valve (84) in a closed state to stop the discharge operation.

In step ST23, the ripening control unit (70) determines whether a ripening start command has been output. For example, a ripening start command is output in response to a ripening start operation by a user when it is time to ripen the plants (15) shortly before the arrival of the container (1) at the destination. The date and time to output the ripening start command may be input in the ripening control unit (70) beforehand.

If the determination in step ST23 is "YES," the process goes to step ST24. If the determination in step ST23 is "NO," step ST23 is repeated.

In step ST24, the ripening control unit (70) performs the ripening operation for supplying the ripening component (16) to the internal space (S). In the ripening operation, the ripening control unit (70) makes the second on-off valve (82) and the third on-off valve (83) in an open state. The ripening control unit (70) activates the compression/decompression device (65) and adjusts the opening degree of the adjustment valve (85). Thus, the ripening component (16) stored in the storage tank (66) is released into the internal space (S) through the bypass passage (73) and the release passage (72).

In the case where the ripening component (16) is adsorbed on the adsorption unit (62), the heater (64) may be heated, and the first on-off valve (81) may be brought into the open state, thereby releasing the ripening component (16) desorbed from the adsorption unit (62) into the internal space (S) through the release passage (72).

In step ST25, the ripening control unit (70) determines whether the ripening of the plants (15) is completed. Specifically, the ripening control unit (70) determines the state of ripeness of the plants (15) based on the detection result of the detector (87). Alternatively, the ripening control unit (70) may estimate the state of ripeness in the ripening operation, based on the amount of the ripening component (16) supplied into the internal space (S) or the time of ripeness.

If the determination in step ST25 is "YES," the process goes to step ST26. If the determination in step ST25 is "NO," step ST25 is repeated. In this case, the opening degree of the adjustment valve (85) may be increased or the heating temperature of the heater (64) may be increased to accelerate the ripening of the plants (15).

In step ST26, the ripening control unit (70) makes the second on-off valve (82) and the third on-off valve (83) in a closed state and stops the operation of the compression/decompression device (65), thereby stopping the ripening operation. Processing in the ripening control device (60) ends here.

In adjusting the concentration of the ripening component (16) by the ripening control device (60), the air composition adjustment device (50) may adjust the air composition to control the respiration of the plants (15), thereby making it possible to adjust the amount of the ripening component (16) generated from the plants (15) and manage the state of ripeness of the plants (15).

### -Advantages of Embodiment-

According to a feature of this embodiment, the ripening component (16) generated from the object (15) is adsorbed on the adsorption unit (62). The ripening component (16) is desorbed from the adsorption unit (62) by the desorption unit (63). The ripening component (16) desorbed by the desorption unit (63) is supplied to the target space (S) by the supply unit (65).

This configuration allows the ripening component (16) generated from the object (15) to be adsorbed on the adsorption unit (62), making it possible to decelerate ripening of the object (15) in a period when the freshness of the object (15) needs to be maintained.

On the other hand, when it is time to ripen the object (15), the ripening component (16) is desorbed from the adsorption unit (62) and supplied into the target space (S), so that the ripening component (16) can be reused.

According to a feature of this embodiment, at least part of the ripening component (16) desorbed by the desorption unit (63) is discharged to the outside of the target space (S) through a discharge portion (74).

Thus, the ripening component (16) that cannot be adsorbed on the adsorption unit (62) can be discharged to the outside of the target space (S).

According to a feature of this embodiment, at least part of the ripening component (16) desorbed by the desorption unit (63) is stored in the storage unit (66).

Thus, the ripening component (16) that cannot be adsorbed on the adsorption unit (62) can be stored in the storage unit (66).

According to a feature of this embodiment, the hollow fiber membrane (62a) used as the adsorption unit (62) can adsorb the ripening component (16) efficiently.

According to a feature of this embodiment, the metal organic framework used as the adsorption unit (62) can adsorb the ripening component (16) efficiently.

According to a feature of this embodiment, the desorption unit (63) includes a heating unit (64). It is therefore possible to heat the adsorption unit (62) and desorb the ripening component (16) adsorbed on the adsorption unit (62).

According to a feature of this embodiment, the desorption unit (63) includes a compression unit (65). It is therefore possible to compress the adsorption unit (62) and desorb the ripening component (16) adsorbed on the adsorption unit (62).

According to a feature of this embodiment, the measurement unit (86) measures the concentration of the ripening component (16) in the target space (S), thereby making it possible to manage the state of ripeness of the object (15).

According to a feature of this embodiment, the adjuster (85) adjusts the concentration of the ripening component (16) in the target space (S), thereby making it possible to manage the state of ripeness of the object (15).

According to a feature of this embodiment, the detector (87) detects the state of the object (15). The ripening control unit (70) controls the operation of the desorption unit (63) based on the detection result.

It is therefore possible to increase or lower the concentration of the ripening component (16) to be supplied into the target space (S) according to the state of ripeness of the object (15).

According to a feature of this embodiment, the air composition adjustment device including the ripening control device (60) and the air composition adjuster (30) adjusts the concentration of the ripening component (16) in the target space (S) and the air composition in the target space (S), thereby making it possible to manage the state of ripeness of the object (15).

According to a feature of this embodiment, a container includes the ripening control device (60) and the container body (2), and the state of ripeness of the object (15) housed in the container body (2) can be managed.

According to a feature of this embodiment, a freezer includes the ripening control device (60) and the refrigeration apparatus (10), and the state of ripeness of the object (15) housed in the freezer can be managed.

### -First Variation-

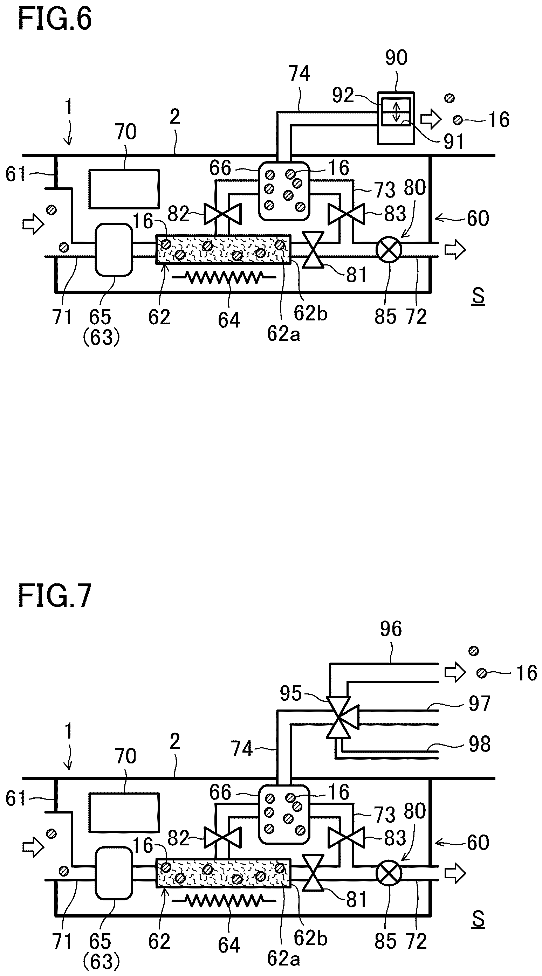

As illustrated in FIG. 6, the upstream end of the discharge passage (74) is connected to the storage tank (66). A discharge box (90) is connected to the downstream end of the discharge passage (74). Air that has passed through the discharge passage (74) flows into the discharge box (90). The discharge box (90) is disposed outside the container body (2).

The discharge box (90) has a discharge outlet (91). The discharge outlet (91) has an open/close door (92). The open/close door (92) are movable between an open position, where the discharge outlet (91) is open, and a closed position, where the discharge outlet (91) is closed. The open/close door (92) adjust the opening degree of the discharge outlet (91) and thereby adjust the amount of ripening component (16) to be discharged from the storage tank (66).

### -Second Variation-

As illustrated in FIG. 7, the upstream end of the discharge passage (74) is connected to the storage tank (66). A three-way switching valve (95) is connected to the downstream end of the discharge passage (74).

A first discharge passage (96), a second discharge passage (97), and a third discharge passage (98) are connected to the three-way switching valve (95). The passage diameter of the first discharge passage (96) is larger than the passage diameter of the second discharge passage (97). The passage diameter of the second discharge passage (97) is larger than the passage diameter of the third discharge passage (98).

The three-way switching valve (95) is switchable between a state in which the discharge passage (74) is closed and a state in which the storage tank (66) communicates with any one of the first discharge passage (96), the second discharge passage (97), or the third discharge passage (98).

The discharge amount of the ripening component (16) is the greatest in the state in which the storage tank (66) communicates with the first discharge passage (96). The discharge amount of the ripening component (16) is the smallest in the state in which the storage tank (66) communicates with the third discharge passage (98). The amount of the ripening component (16) to be discharged from the storage tank (66) is adjusted in this manner.

### -Third Variation-

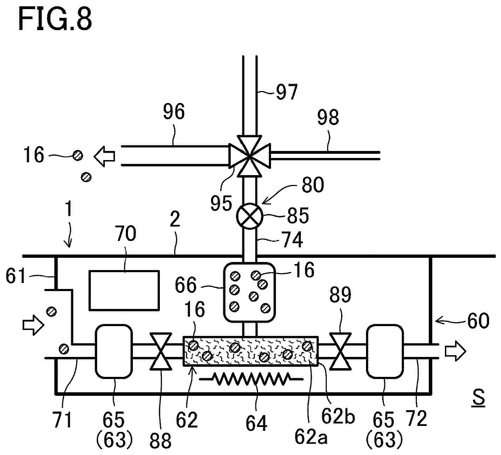

As illustrated in FIG. 8, the compression/decompression device (65) and a first on-off valve (88) are connected to the intake passage (71) in this order from the upstream side. A second on-off valve (89) and the compression/decompression device (65) are connected to the release passage (72) in this order from the upstream side.

The storage tank (66) is connected to the adsorption unit (62). The storage tank (66) stores air containing the ripening component (16) desorbed from the adsorption unit (62). The upstream end of the discharge passage (74) is connected to the storage tank (66). A three-way switching valve (95) is connected to the downstream end of the discharge passage (74). An adjustment valve (85) is connected to a midpoint of the discharge passage (74). The opening degree of the adjustment valve (85) is adjusted to adjust the amount of air to be discharged from the discharge passage (74).

A first discharge passage (96), a second discharge passage (97), and a third discharge passage (98) are connected to the three-way switching valve (95). The passage diameter of the first discharge passage (96) is larger than the passage diameter of the second discharge passage (97). The passage diameter of the second discharge passage (97) is larger than the passage diameter of the third discharge passage (98).

The three-way switching valve (95) is switchable between a state in which the discharge passage (74) is closed and a state in which the storage tank (66) communicates with any one of the first discharge passage (96), the second discharge passage (97), or the third discharge passage (98).

**In** the adsorption operation, the first on-off valve (88) is brought into an open state, the second on-off valve (89), the adjustment valve (85), and the three-way switching valve (95) into a closed state. The ripening control unit (70) activates the compression/decompression device (65) on the intake passage (71).

**In** the desorption operation, the second on-off valve (89) is brought into an open state, the first on-off valve (88), the adjustment valve (85), and the three-way switching valve (95) into a closed state. The ripening control unit (70) activates the compression/decompression device (65) on the release passage (72). Part of the ripening component (16) desorbed is stored in the storage tank (66).

**In** the discharge operation, the opening degree of the adjustment valve (85) is adjusted, and the state of communication of the three-way switching valve (95) is changed. Part of the ripening component (16) stored in the storage tank (66) passes through the discharge passage (74) and is discharged to the outside of the container (1). After a certain amount of the ripening component (16) is discharged from the storage tank (66), the ripening control unit (70) makes the adjustment valve (85) and the three-way switching valve (95) in a closed state.

The amount of the ripening component (16) to be discharged from the storage tank (66) is adjusted in this manner.

### -Fourth Variation-

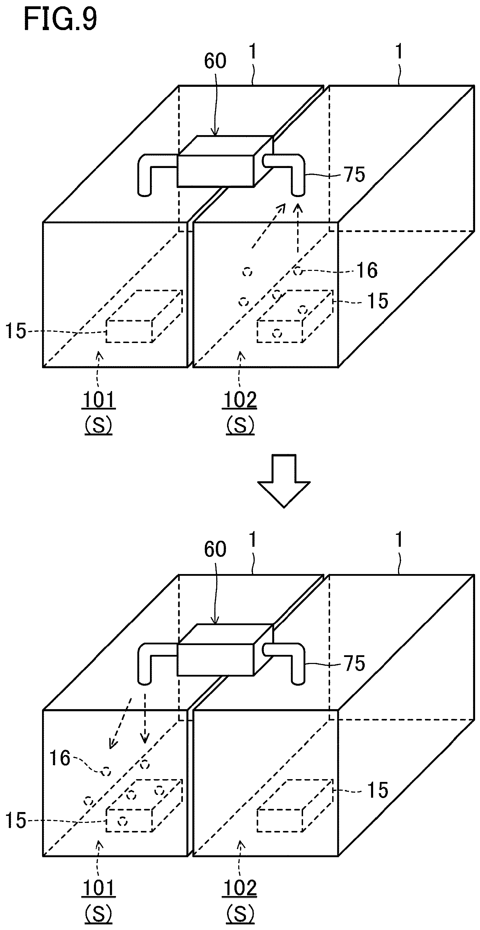

As illustrated in FIG. 9, the target space (S) includes a first target space (101) and a second target space (102). Two containers (1) are provided in the example illustrated in FIG. 9. **In** FIG. 9, the inside of the container (1) on the left side is referred to as the first target space (101), and the inside of the container (1) on the right side is referred to as the second target space (102). The two containers (1) are connected to each other by a connection passage (75). The first target space (101) and the second target space (102) communicate with each other through the connection passage (75). The ripening control device (60) is connected to a midpoint of the connection passage (75).

The ripening control unit (70) of the ripening control device (60) executes a first mode and a second mode. **In** the first mode, the ripening component (16) generated from the plants (15) in the second target space (102) and adsorbed on the adsorption unit (62) is supplied to the first target space (101) (see FIG. 9).

Specifically, in the first mode, the ripening component (16) generated from the plants (15) in the second target space (102) is adsorbed on the adsorption unit (62). The ripening component (16) adsorbed on the adsorption unit (62) and thereafter desorbed from the adsorption unit (62) is stored in the storage tank (66). The ripening component (16) stored in the storage tank (66) is supplied to the first target space (101) when it is time to ripen the plants (15) in the first target space (101).

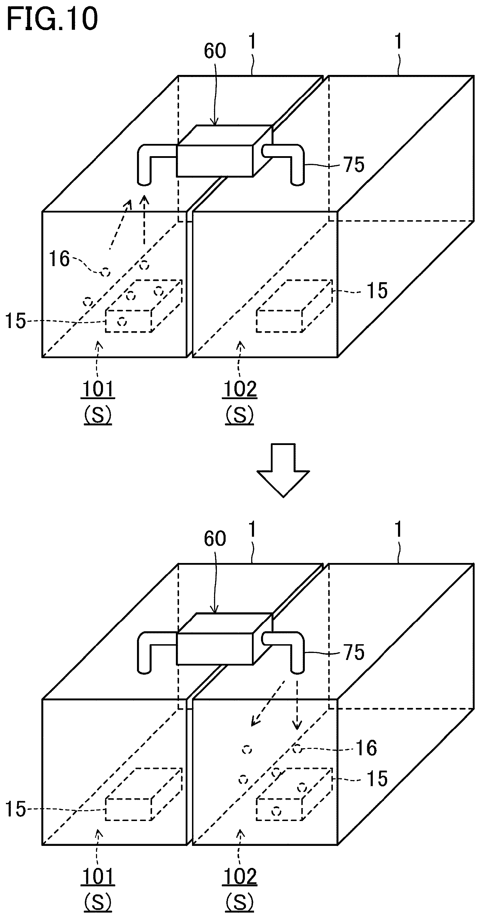

On the other hand, in the second mode, the ripening component (16) generated from the plants (15) in the first target space (101) and adsorbed on the adsorption unit (62) is supplied to the second target space (102) (see Figure 10).

Specifically, in the second mode, the ripening component (16) generated from the plants (15) in the first target space (101) is adsorbed on the adsorption unit (62). The ripening component (16) adsorbed on the adsorption unit (62) and thereafter desorbed from the adsorption unit (62) is stored in the storage tank (66). The ripening component (16) stored in the storage tank (66) is supplied to the second target space (102) when it is time to ripen the plants (15) in the second target space (102).

FIGS. 9 and 10 illustrate the configuration in which the ripening component (16) is exchanged between the two containers (1) where the plants (15) are stored. However, the ripening component (16) may be exchanged between two storerooms, for example, where the plants (15) are stored.

### «Other Embodiments»

The above-described embodiment may be modified as follows.

The above embodiment is not limited to the configuration in which the hollow fiber membrane (62a) or the metal organic framework (MOF) is used as the adsorption unit (62). For example, zeolite, active carbon, natural rock, bamboo, etc. may be used. Alternatively, a holding unit for holding the ripening component (16) may be configured to allow air containing the ripening component (16) to pass therethrough and trap the ripening component (16) in the inner space of the holding unit (62).

In the above embodiment, ethylene is described as an example of the ripening component (16) generated from the plants (15), but butylene, propylene, acetylene, or the like, for example, may also be used.

In the above embodiment, a semiconductor sensor is described as an example of the sensor for measuring the concentration of the ripening component (16), but a catalytic combustion sensor, an electrochemical sensor, a biological component sensor, or the like, for example, may be used.

In the above embodiment, the heating unit (64) is not limited to the heater (64), but a thermoelectric element, high-temperature and high-pressure gas or exhaust heat from the refrigeration apparatus (10), or the like, for example, may also be used.

In the above embodiment, a configuration having both of the heating unit (64) and the compression unit (65) is described as an example of the desorption unit (63), but the desorption unit (63) may have only one of them.

In the above embodiment, the detector (87) for detecting the state of ripeness of the plants (15) may be configured to detect images, near-infrared rays, respiratory quotient, fluorescence, scent, or the like.

In the above embodiment, the ripening control device (60) is applied to the container (1) for marine transportation as an example. However, the application of the ripening control device (60) is not limited thereto. The ripening control device (60) can be used to control ripening not only in the container for marine transportation, but also in, for example, a container for land transportation, a mere refrigerated warehouse, a warehouse at a room temperature, or the like. The ripening control device (60) may be used for ripening control in the internal space of a stationary storeroom (refrigerated warehouse), not for a storeroom for transportation. The ripening control device (60) may be applicable to a box of a size that can accommodate a few plants (15).

### INDUSTRIAL APPLICABILITY

As can be seen from the foregoing description, the present disclosure is useful for a ripening control device, an air composition adjustment device, a container, and a freezer.

### DESCRIPTION OF REFERENCE CHARACTERS

- 1: Container (Freezer)
- 2: Container Body
- 10: Refrigeration Apparatus
- 15: Plant (Object)
- 16: Ripening Component
- 30: Gas Supply Unit (Air Composition Adjuster)
- 60: Ripening Control Device
- 62: Adsorption Unit (Holding Unit)
- 62a: Hollow Fiber Membrane
- 63: Desorption Unit
- 64: Heater (Heating Unit)
- 65: Compression/Decompression Device (Supply Unit, Compression Unit)
- 66: Storage Tank (Storage Unit)
- 70: Ripening Control Unit
- 74: Discharge Passage (Discharge Portion)
- 80: Adjuster
- 85: Adjustment Valve
- 86: Measurement Unit
- 87: Detector
- 91: Discharge Outlet
- 92: Open/Close Door (Open/Close Portion)
- 95: Three-Way Switching Valve (Switching Valve)
- 96: First Discharge Passage (Discharge Passage)
- 97: Second Discharge Passage (Discharge Passage)
- 98: Third Discharge Passage (Discharge Passage)
- 101: First Target Space
- 102: Second Target Space
- S: Internal Space (Target Space)

## Claims

1. A ripening control device configured to ripen an object (15) stored in a target space (S), the ripening control device comprising:
an adsorption unit (62) configured to hold a ripening component (16) that is generated from the object (15) and ripens the object (15);
a desorption unit (63) configured to desorb the ripening component (16) held in the adsorption unit (62) from the adsorption unit (62); and
a supply unit (65) configured to supply the ripening component (16) desorbed by the desorption unit (63) into the target space (S)
**characterized in that**
the ripening control device further comprises:
a storage tank (66) configured to store at least part of the ripening component (16) desorbed from the adsorption unit (62) by the desorption unit (63) when the ripening component (16) held in the adsorption unit (62) is greater than a predetermined upper limit; and
a discharge portion (74) configured to discharge at least part of the ripening component (16) stored in the storage tank (66) to outside of the target space (S) when an amount of the ripening component (16) stored in the storage tank (66) is larger than a predetermined storable upper limit.

2. The ripening control device of claim 1, further comprising:
a ripening control unit (70) configured to control operations of the desorption unit (63) and the supply unit (65), wherein
the target space (S) includes a first target space (101) and a second target space (102), and
the ripening control unit (70) is configured to execute a first mode in which the ripening component (16) generated from the object (15) in the second target space (102) and held in the adsorption unit (62) is supplied to the first target space (101).

3. The ripening control device of claim 2, wherein
the ripening control unit (70) is configured to execute a second mode in which the ripening component (16) generated from the object (15) in the first target space (101) and held in the adsorption unit (62) is supplied to the second target space (102).

4. The ripening control device of any one of claims 1 to 3, wherein
the adsorption unit (62) has a hollow fiber membrane (62a).

5. The ripening control device of any one of claims 1 to 3, wherein
the adsorption unit (62) has a metal organic framework.

6. The ripening control device of any one of claims 1 to 5, wherein
the adsorption unit (62) is connected to a storage tank (66) for storing air containing the ripening component (16).

7. The ripening control device of any one of claims 1 to 6, wherein
the desorption unit (63) has a heating unit (64) configured to heat the adsorption unit (62).

8. The ripening control device of any one of claims 1 to 7, wherein
the desorption unit (63) has a compression unit (65) configured to compress the adsorption unit (62).

9. The ripening control device of any one of claims 1 to 8, further comprising:
a measurement unit (86) configured to measure a concentration of the ripening component (16) in the target space (S).

10. The ripening control device of any one of claims 1 to 9, further comprising:
an adjuster (80) configured to adjust a concentration of the ripening component (16) in the target space (S).

11. The ripening control device of any one of claims 1 to 10, wherein
the adjuster (80) includes at least one of a heating unit (64), a compression unit (65), an adjustment valve (85), an open/close portion (92), or a switching valve (95),
the heating unit (64) adjusts an amount of heating the adsorption unit (62),
the compression unit (65) adjusts an amount of compressing the adsorption unit (62),
the adjustment valve (85) adjusts an amount of air to be released from the adsorption unit (62) to the target space (S),
the open/close portion (92) adjusts an opening degree of a discharge outlet (91) connecting a storage tank (66) for storing the ripening component (16) with outside, and
the switching valve (95) is configured to allow any one of a plurality of discharge passages (96, 97, 98) having different passage diameters and connected to the outside to communicate with the storage tank (66).

12. The ripening control device of any one of claims 1 to 11, further comprising:
a detector (87) configured to detect a state of the object (15); and
a ripening control unit (70) configured to control an operation of the desorption unit (63) based on a detection result of the detector (87).

13. An air composition adjustment device, comprising:
the ripening control device (60) of any one of claims 1 to 12; and
an air composition adjuster (30) configured to introduce air adjusted to composition different from composition of outside air into the target space (S).

14. A container, comprising:
the ripening control device (60) of any one of claims 1 to 12; and
a container body (2) having the target space (S) therein.

15. A freezer, comprising:
the ripening control device (60) of any one of claims 1 to 12; and
a refrigeration apparatus (10) configured to cool the target space (S).

## Patentansprüche

1. Reifungssteuerungsvorrichtung, die dazu ausgebildet ist, ein in einem Zielraum (S) gelagertes Objekt (15) zu reifen, wobei die Reifungssteuerungsvorrichtung umfasst:
eine Adsorptionseinheit (62), die dazu ausgebildet ist, eine Reifungskomponente (16) zu halten, die von dem Objekt (15) erzeugt wird, und das Objekt (15) reift;
eine Desorptionseinheit (63), die dazu ausgebildet ist, die in der Adsorptionseinheit (62) gehaltene Reifungskomponente (16) aus der Adsorptionseinheit (62) zu desorbieren; und
eine Zufuhreinheit (65), die dazu ausgebildet ist, die von der Desorptionseinheit (63) desorbierte Reifungskomponente (16) in den Zielraum (S) zuzuführen
**dadurch gekennzeichnet, dass** die Reifungssteuerungsvorrichtung weiter umfasst:
einen Speichertank (66), der dazu ausgebildet ist, mindestens einen Teil der von der Adsorptionseinheit (62) durch die Desorptionseinheit (63) desorbierten Reifungskomponente (16) zu speichern, wenn die in der Adsorptionseinheit (62) gehaltene Reifungskomponente (16) größer ist als eine vorgegebene Obergrenze;
und
einen Ablassabschnitt (74), der dazu ausgebildet ist, mindestens einen Teil der in dem Speichertank (66) gespeicherten Reifungskomponente (16) außerhalb des Zielraums (S) abzulassen, wenn eine Menge der in dem Speichertank (66) gespeicherten Reifungskomponente (16) größer ist als eine vorgegebene Speicherobergrenze.

2. Reifungssteuerungsvorrichtung nach Anspruch 1, weiter umfassend:
eine Reifungssteuereinheit (70), die dazu ausgebildet ist, Betriebe der Desorptionseinheit (63) und der Zufuhreinheit (65) zu steuern, wobei
der Zielraum (S) einen ersten Zielraum (101) und einen zweiten Zielraum (102) einschließt, und
die Reifungssteuereinheit (70) dazu ausgebildet ist, einen ersten Modus auszuführen, in dem die von dem Objekt (15) in dem zweiten Zielraum (102) erzeugte und in der Adsorptionseinheit (62) gehaltene Reifungskomponente (16) dem ersten Zielraum (101) zugeführt wird.

3. Reifungssteuerungsvorrichtung nach Anspruch 2, wobei
die Reifungssteuereinheit (70) dazu ausgebildet ist, einen zweiten Modus auszuführen, in dem die von dem Objekt (15) in dem ersten Zielraum (101) erzeugte und in der Adsorptionseinheit (62) gehaltene Reifungskomponente (16) dem zweiten Zielraum (102) zugeführt wird.

4. Reifungssteuerungsvorrichtung nach einem der Ansprüche 1 bis 3, wobei
die Adsorptionseinheit (62) eine Hohlfasermembran (62a) aufweist.

5. Reifungssteuerungsvorrichtung nach einem der Ansprüche 1 bis 3, wobei
die Adsorptionseinheit (62) ein metallorganisches Gerüst aufweist.

6. Reifungssteuerungsvorrichtung nach einem der Ansprüche 1 bis 5, wobei
die Adsorptionseinheit (62) mit einem Speichertank (66) zum Speichern von Luft, die die Reifungskomponente (16) enthält, verbunden ist.

7. Reifungssteuerungsvorrichtung nach einem der Ansprüche 1 bis 6, wobei
die Desorptionseinheit (63) eine Heizeinheit (64) aufweist, die dazu ausgebildet ist, die Adsorptionseinheit (62) zu erhitzen.

8. Reifungssteuerungsvorrichtung nach einem der Ansprüche 1 bis 7, wobei
die Desorptionseinheit (63) eine Kompressionseinheit (65) aufweist, die dazu ausgebildet ist, die Adsorptionseinheit (62) zu komprimieren.

9. Reifungssteuerungsvorrichtung nach einem der Ansprüche 1 bis 8, weiter umfassend:
eine Messeinheit (86), die dazu ausgebildet ist, eine Konzentration der Reifungskomponente (16) in dem Zielraum (S) zu messen.

10. Reifungssteuerungsvorrichtung nach einem der Ansprüche 1 bis 9, weiter umfassend:
eine Einstelleinrichtung (80), die dazu ausgebildet ist, eine Konzentration der Reifungskomponente (16) in dem Zielraum (S) einzustellen.

11. Reifungssteuerungsvorrichtung nach einem der Ansprüche 1 bis 10, wobei
die Einstelleinrichtung (80) mindestens eines von einer Heizeinheit (64), einer Kompressionseinheit (65), einem Einstellventil (85), einem Öffnungs-/Schließabschnitt (92) oder einem Umschaltventil (95) einschließt,
die Heizeinheit (64) eine Menge des Erhitzens der Adsorptionseinheit (62) einstellt,
die Kompressionseinheit (65) eine Menge des Komprimierens der Adsorptionseinheit (62) einstellt,
das Einstellventil (85) eine Menge von Luft einstellt, die aus der Adsorptionseinheit (62) in den Zielraum (S) freigegeben werden soll,
der Öffnungs-/Schließabschnitt (92) einen Öffnungsgrad einer Ablassöffnung (91) einstellt, die einen Speichertank (66) zum Speichern der Reifungskomponente (16) mit dem Außenraum verbindet, und
das Umschaltventil (95) dazu ausgebildet ist, einen beliebigen einer Vielzahl von Ablassdurchlässen (96, 97, 98), die unterschiedliche Leitungsdurchmesser aufweisen und mit dem Außenraum verbunden sind, mit dem Speichertank (66) in Verbindung treten zu lassen.

12. Reifungssteuerungsvorrichtung nach einem der Ansprüche 1 bis 11, weiter umfassend:
einen Detektor (87), der dazu ausgebildet ist, einen Zustand des Objekts (15) zu erfassen; und
eine Reifungssteuereinheit (70), die dazu ausgebildet ist, einen Betrieb der Desorptionseinheit (63) basierend auf einem Detektionsergebnis des Detektors (87) zu steuern.

13. Luftzusammensetzungsanpassungsvorrichtung, umfassend:
die Reifungssteuerungsvorrichtung (60) nach einem der Ansprüche 1 bis 12; und
einen Luftzusammensetzungsanpasser (30), der dazu ausgebildet ist, Luft, die auf eine von der Zusammensetzung der Außenluft verschiedene Zusammensetzung eingestellt ist, in den Zielraum (S) einzuführen.

14. Behälter, umfassend:
die Reifungssteuerungsvorrichtung (60) nach einem der Ansprüche 1 bis 12; und
einen Behälterkörper (2), der den Zielraum (S) darin aufweist.

15. Gefrierschrank, umfassend:
die Reifungssteuerungsvorrichtung (60) nach einem der Ansprüche 1 bis 12; und
eine Kältevorrichtung (10), die dazu ausgebildet ist, den Zielraum (S) zu kühlen.

## Revendications

1. Dispositif de commande de mûrissement, configuré pour faire mûrir un objet (15) stocké dans un espace cible (S), le dispositif de commande de mûrissement comprenant :
une unité d'adsorption (62), configurée pour retenir un composant de mûrissement (16) qui est généré à partir de l'objet (15) et qui fait mûrir l'objet (15) ;
une unité de désorption (63), configurée pour désorber le composant de mûrissement (16) retenu dans l'unité d'adsorption (62) hors de l'unité d'adsorption (62) ; et
une unité d'alimentation (65), configurée pour alimenter l'espace cible (S) en composant de mûrissement (16) désorbé par l'unité de désorption (63),
**caractérisé en ce que**
le dispositif de commande de mûrissement comprend en outre :
un réservoir de stockage (66), configuré pour stocker au moins une partie du composant de mûrissement (16) désorbé hors de l'unité d'adsorption (62) par l'unité de désorption (63) lorsque le composant de mûrissement (16) retenu dans l'unité d'adsorption (62) est supérieur à une limite supérieure prédéterminée ;
et
une partie d'évacuation (74), configurée pour évacuer au moins une partie du composant de mûrissement (16) stocké dans le réservoir de stockage (66) vers l'extérieur de l'espace cible (S) lorsqu'une quantité du composant de mûrissement (16) stocké dans le réservoir de stockage (66) est plus grande qu'une limite supérieure stockable prédéterminée.

2. Dispositif de commande de mûrissement selon la revendication 1, comprenant en outre :
une unité (70) de commande de mûrissement, configurée pour commander des fonctionnements de l'unité de désorption (63) et de l'unité d'alimentation (65), dans lequel
l'espace cible (S) inclut un premier espace cible (101) et un deuxième espace cible (102), et
l'unité (70) de commande de mûrissement est configurée pour mettre en œuvre un premier mode dans lequel le composant de mûrissement (16), généré à partir de l'objet (15) dans le deuxième espace cible (102) et retenu dans l'unité d'adsorption (62), est alimenté dans le premier espace cible (101).

3. Dispositif de commande de mûrissement selon la revendication 2, dans lequel
l'unité (70) de commande de mûrissement est configurée pour mettre en œuvre un deuxième mode dans lequel le composant de mûrissement (16), généré à partir de l'objet (15) dans le premier espace cible (101) et retenu dans l'unité d'adsorption (62), est alimenté dans le deuxième espace cible (102).

4. Dispositif de commande de mûrissement selon l'une quelconque des revendications 1 à 3, dans lequel
l'unité d'adsorption (62) présente une membrane à fibres creuses (62a).

5. Dispositif de commande de mûrissement selon l'une quelconque des revendications 1 à 3, dans lequel
l'unité d'adsorption (62) présente une structure métallo-organique.

6. Dispositif de commande de mûrissement selon l'une quelconque des revendications 1 à 5, dans lequel
l'unité d'adsorption (62) est reliée à un réservoir de stockage (66) destiné à stocker de l'air contenant le composant de mûrissement (16).

7. Dispositif de commande de mûrissement selon l'une quelconque des revendications 1 à 6, dans lequel
l'unité de désorption (63) présente une unité de chauffage (64) configurée pour chauffer l'unité d'adsorption (62).

8. Dispositif de commande de mûrissement selon l'une quelconque des revendications 1 à 7, dans lequel
l'unité de désorption (63) présente une unité de compression (65) configurée pour comprimer l'unité d'adsorption (62).

9. Dispositif de commande de mûrissement selon l'une quelconque des revendications 1 à 8, comprenant en outre :
une unité de mesure (86), configurée pour mesurer une concentration du composant de mûrissement (16) dans l'espace cible (S).

10. Dispositif de commande de mûrissement selon l'une quelconque des revendications 1 à 9, comprenant en outre :
un appareil de réglage (80), configuré pour régler une concentration du composant de mûrissement (16) dans l'espace cible (S).

11. Dispositif de commande de mûrissement selon l'une quelconque des revendications 1 à 10, dans lequel
l'appareil de réglage (80) inclut au moins l'une parmi une unité de chauffage (64), une unité de compression (65), une vanne de réglage (85), une portion d'ouverture/fermeture (92), ou une vanne de commutation (95),
l'unité de chauffage (64) règle une quantité de chauffage de l'unité d'adsorption (62),
l'unité de compression (65) règle une quantité de compression de l'unité d'adsorption (62),
la vanne de réglage (85) règle une quantité d'air à libérer depuis l'unité d'adsorption (62) vers l'espace cible (S),
la portion d'ouverture/fermeture (92) règle un degré d'ouverture d'un orifice d'évacuation (91) reliant un réservoir de stockage (66) destiné à stocker le composant de mûrissement (16) à l'extérieur, et
la vanne de commutation (95) est configurée pour permettre à l'un quelconque d'une pluralité de passages d'évacuation (96, 97, 98) présentant des diamètres de passage différents et reliés à l'extérieur de communiquer avec le réservoir de stockage (66).

12. Dispositif de commande de mûrissement selon l'une quelconque des revendications 1 à 11, comprenant en outre :
un détecteur (87), configuré pour détecter un état de l'objet (15) ; et
une unité (70) de commande de mûrissement, configurée pour commander un fonctionnement de l'unité de désorption (63) sur la base d'un résultat de détection du détecteur (87).

13. Dispositif de réglage de composition d'air, comprenant :
le dispositif (60) de commande de mûrissement selon l'une quelconque des revendications 1 à 12 ; et
un appareil (30) de réglage de composition d'air, configuré pour introduire dans l'espace cible (S) de l'air réglé à une composition différente de la composition de l'air extérieur.

14. Conteneur, comprenant :
le dispositif (60) de commande de mûrissement selon l'une quelconque des revendications 1 à 12 ; et
un corps de conteneur (2) ayant l'espace cible (S) en lui.

15. Congélateur, comprenant :
le dispositif (60) de commande de mûrissement selon l'une quelconque des revendications 1 à 12 ; et
un appareil de réfrigération (10) configuré pour refroidir l'espace cible (S).
